# EUROPÄISCHE PATENTANMELDUNG

(11) **EP 4 699 872 A1**
(43) Veröffentlichungstag der Anmeldung: **25.02.2026**
(21) Anmeldenummer: 25189044.8
(22) Anmeldetag: 11.07.2025
(51) Int. Cl.: B60T 1/06, F16D 55/36, F16D 59/02

(54) **MOTOR-BREMS-EINHEIT, HOCHAUFTRIEBSSYSTEM, LUFTFAHRZEUG UND VERFAHREN**

(30) Priorität: 19.08.2024 DE 102024123583
(71) Anmelder: Liebherr-Aerospace Lindenberg GmbH, 88161 Lindenberg (DE)
(72) Erfinder: STEGMANN, Habib, 88161 Lindenberg (DE)
(74) Vertreter: Lorenz Seidler Gossel Part. mbB

(57) **Zusammenfassung**

Die vorliegende Erfindung betrifft ein Motor-Brems-Einheit, insbesondere für ein Luftfahrzeug, mit einem Motor, einer Bremse, einem Abtrieb und einer Steuereinheit, die derart ausgebildet und angeordnet ist, um die Bremse anzusteuern, wobei die Steuereinheit derart ausgebildet ist, um die Bremse zu öffnen, wenn ein Drehmoment an dem Motor und/oder dem Abtrieb anliegt und/oder die Bremse zu schließen oder geschlossen zu halten, wenn kein Drehmoment an dem Motor und/oder dem Abtrieb anliegt, wobei die Steuereinheit eine motorseitige und eine abtriebsseitige Steuerscheibe aufweist, wobei mindestens eine der Steuerscheiben eine oder mehrere Steuerrampen aufweist.

## Beschreibung

Die vorliegende Erfindung betrifft eine Motor-Brems-Einheit, insbesondere für ein Luftfahrzeug, mit einem Motor, einer Bremse, einem Abtrieb und einer Steuereinheit, die derart ausgebildet und angeordnet ist, um die Bremse anzusteuern, wobei die Steuereinheit derart ausgebildet ist, um die Bremse zu öffnen, wenn ein Drehmoment an dem Motor und/oder dem Abtrieb anliegt und/oder die Bremse zu schließen oder geschlossen zu halten, wenn kein Drehmoment an dem Motor und/oder dem Abtrieb anliegt.

Aus dem Stand der Technik ist bekannt, dass Haltefunktionen für Steuerflächen eines Hochauftriebssystems eines Flugzeugs durch separate, eigenständige Bremsen ausgeübt werden. Diese Bremsen werden dabei durch schwere Elektromagnete geöffnet, während die Steuerflächen positioniert werden.

Ebenso ist bekannt, dass bei einigen Flugzeugtypen Rücklaufsperren verwendet werden, die die jeweilige Steuerfläche in jeder Position halten, sofern der die Steuerfläche antreibende Motor steht. Nachteil dieser Rücklaufsperren ist, dass hier Konstantbremsen eingesetzt werden, sodass bei jeder Betätigung zusätzliche Energie aufgebracht werden muss, um die Bremskraft der Konstantbremsen zu überwinden und die Rücklaufsperren zu bewegen, wobei auch sehr viel Wärme bzw. Verlustenergie erzeugt wird.

Ebenso ist Stand der Technik aus der EP 4 250 540 A1 bekannt. Hier wird eine Bremse offenbart, die durch eine durch den Elektromotor induzierte Kraft geöffnet wird. Nachteil dieser Lehre ist, dass ein Elektromotor, der beim Antreiben noch genügend Energie aufbringt, um in axialer Richtung einen eine Bremse zu öffnen, für die Luftfahrt zu ineffizient ist. Oder anders gesehen, weist ein für die Luftfahrt oder andere Anwendungen für den Antrieb optimierter Elektromotor nicht genügend Magnetkraft auf, um eine in der EP 4 250 540 A1 offenbarte Bremse zu öffnen.

Vor diesem Hintergrund liegt der vorliegenden Erfindung die Aufgabe zugrunde, eine Motor-Brems-Einheit der eingangs genannten Art, insbesondere im Hinblick auf Gewicht und Effizienz, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Steuereinheit eine motorseitige und eine abtriebsseitige Steuerscheibe aufweist, wobei mindestens eine der Steuerscheiben eine oder mehrere Steuerrampen aufweist.

Der Begriff "Ansteuern" ist im Rahmen dieser Erfindung vorzugsweise derart zu verstehen, dass ein Öffnen oder Schließen der jeweiligen angesteuerten Komponente mittels, insbesondere einer Bewegung, der ansteuernden Komponente erfolgt.

In einem geschlossenen Zustand der Bremse ist vorzugsweise ein Kraft- und/oder Momentenfluss durch die Bremse möglich. In einem geöffneten Zustand der Bremse ist vorzugsweise kein Kraft- und/oder Momentenfluss durch die Bremse möglich.

Die Formulierung, dass ein Drehmoment an dem Motor anliegt, umfasst vorzugsweise den Fall, dass der Motor ein Drehmoment erzeugt.

Die Steuerscheiben können scheibenförmig sein, können aber auch eine andere Form aufweisen.

Die Steuerrampe kann eine Kugel- oder Rollenrampe sein.

Die Bremse ist vorzugsweise eine motorgetriggerte Bremse.

Vorzugsweise erfolgt eine Verknüpfung eines Steuerrampenmechanismus mit einer federvorgespannten reibschlüssigen oder formschlüssigen Bremse.

Vorzugsweise kann die Motor-Brems-Einheit eine Positionierungs- und/oder Haltefunktion für ein Element eines Systems, das durch einen beliebigen Motor positioniert werden kann, ausüben.

Vorzugsweise ist vorgesehen, dass zwischen der motorseitigen und der abtriebsseitigen Steuerscheibe ein oder mehrere Übertragungselemente, insbesondere Kugeln, angeordnet sind.

Das Übertragungselement kann eine Kugel oder eine Rolle sein.

Vorzugsweise ist vorgesehen, dass die Steuereinheit ein Federelement aufweist, wobei das Federelement derart ausgebildet und angeordnet ist, um die Steuerscheiben gegeneinander zu drücken und/oder um auf die Bremse eine Schließkraft auszuüben.

Vorzugsweise ist vorgesehen, dass die Bremse zwei Bremselemente aufweist, wobei eines der Bremselemente mit einem Gehäuse und/oder das andere Bremselement mit der abtriebsseitigen Steuerscheibe verbunden ist.

Vorzugsweise ist vorgesehen, dass die Bremselemente jeweils einen oder keinen Reibbelag und/oder ein Formschlussprofil, insbesondere eine Stirnverzahnung, aufweisen.

Vorzugsweise ist vorgesehen, dass die Brems-Einheit ein oder mehrere Wegbegrenzungselemente aufweist, wobei das Wegbegrenzungselement oder die Wegbegrenzungselemente derart ausgebildet und angeordnet sind, um einen Weg und/oder eine Bewegung der Steuerscheibe oder der Steuerscheiben zu begrenzen.

Vorzugsweise ist vorgesehen, dass das Wegbegrenzungselement oder die Wegbegrenzungselemente in Form eines Steuerrampenanschlags in die Steuerrampe oder die Steuerrampen integriert sind, einen, insbesondere axialen und/oder radialen, Anschlag bilden und/oder ein Formelement aufweisen oder darstellen.

Vorzugsweise ist vorgesehen, dass eine oder mehrere Steuerscheiben eine oder mehrere Öffnungen aufweisen, wobei ein oder mehrere Wegbegrenzungselemente derart ausgebildet und angeordnet sind, um die Öffnung oder die Öffnungen oder jeweils eine oder mehrerer Öffnungen zu durchdringen oder in diese einzudringen. Die Öffnung oder die Öffnungen können durchgängig oder nur teilweise durchgängig sein.

Vorzugsweise erfolgt eine Wegbegrenzung des Steuerrampenmechanismus durch einen Anschlag in einer Steuerrampe.

Vorzugsweise erfolgt eine Wegbegrenzung des Steuerrampenmechanismus durch einen axialen Anschlag.

Vorzugsweise erfolgt eine Wegbegrenzung des Steuerrampenmechanismus durch Formelemente, Fingerelemente und/oder Anschläge etc. außen und/oder innen an der Steuerscheibe oder den Steuerscheiben.

Vorzugsweise ist vorgesehen, dass die Motor-Brems-Einheit eine oder keine Rücklaufsperre und/oder eine oder keine Konstantbremse aufweist.

Vorzugsweise ist vorgesehen, dass die Bremse ein Reibbelagspaket aufweist.

Vorzugsweise wird die Brems- und/oder Haltekraft der Bremse durch Verwendung eines Reibbelagspakets maßgeblich verstärkt.

Vorzugsweise ist vorgesehen, dass der Motor ein Elektromotor ist.

Vorzugsweise ist vorgesehen, dass die Steuerrampe oder mindestens eine der Steuerrampen derart ausgebildet und angeordnet sind, dass die Bremskraft der Bremse bei einer, insbesondere Dreh-, Bewegung und/oder Position der Steuerscheibe gegenüber der Bremskraft der Bremse bei der anderen, insbesondere Dreh-, Bewegung und/oder Position der Steuerscheibe erhöht ist.

Vorzugsweise sind die Bauteile der Motor-Brems-Einheit so angeordnet und die Steuerrampe so asymmetrisch ausgeführt, dass sich die Bremskraft durch Betätigung in eine Richtung verstärkt.

Die Erfindung betrifft auch ein Hochauftriebssystem, insbesondere für ein Luftfahrzeug, mit einer erfindungsgemäßen Motor-Brems-Einheit nach einem der Ansprüche 1 bis 12.

Vorzugsweise kann die Motor-Brems-Einheit für jedes System verwendet werden, das Elemente aufweist, die durch einen Motor angetrieben und/oder positioniert werden und dann durch eine Bremse gehalten werden sollen.

Vorzugsweise ist vorgesehen, dass das Hochauftriebssystem einen oder mehrere Aktuatoren zur Ansteuerung einer Steuerfläche aufweist, wobei jeweils eine Rücklaufsperre an einem Aktuator angeordnet ist, wobei die Motor-Brems-Einheit derart ausgebildet und angeordnet ist, um die Steuerfläche beim Ausfall einer oder mehrerer Rücklaufsperren in der aktuellen Position zu halten.

Vorzugsweise kann die Motor-Bems-Einheit als zusätzliche Sicherheitsbremse in einem System, das über Rücklaufsperren verfügt, verwendet werden. Für den Fall, dass eine Rücklaufsperre versagen sollte, kann die Motor-Bems-Einheit verhindern, dass durch die durchrutschende Rücklaufsperre das gesamte Antriebssystem des Systems über den Antriebsstrang des Systems geöffnet wird.

Vorzugsweise weist das Hochauftriebssystem Aktuatoren mit Rücklaufsperren an den Aktuatoren und eine Motor-Brems-Einheit, die das System bei Versagen mindestens einer Rücklaufsperre halten kann, ohne eine zusätzliche Konstantbremse oder separat schaltbare Bremse zu benötigen, auf.

Vorzugsweise ist vorgesehen, dass das Hochauftriebssystem keine zusätzliche Brems-Einheit, vorzugsweise keine Konstantbremse und/oder separat schaltbare Brems-Einheit, aufweist.

Die Motor-Brems-Einheit kann Bestandteil eines beliebigen motorbetriebenen Stellsystems, das durch den Motor bewegt werden kann, und das auch unter Last stehen bleiben soll, sobald der Motor steht bzw. ohne Energie, in Form von Strom und/oder Hydraulik etc., ist.

Die Erfindung betrifft auch ein Luftfahrzeug, insbesondere Flugzeug, mit einer erfindungsgemäßen Motor-Brems-Einheit und/oder einem erfindungsgemäßen Hochauftriebssystem.

Besonders bevorzugt wird die Motor-Brems-Einheit für den elektromechanischen Antrieb von einer oder mehreren Landeklappen eines Flugzeuges verwendet.

Die Erfindung betrifft auch ein Verfahren zum Betreiben einer erfindungsgemäßen Motor-Brems-Einheit mit den folgenden Schritten:
- Anlegen eines Drehmoments an den Motor und/oder den Abtrieb, insbesondere durch den Motor, und Öffnen der Bremse; und/oder
- Anlegen keines Drehmoments auf den Motor und/oder den Abtrieb und Schließen oder geschlossen halten der Bremse.

Die Begriffe motorseitig und abtriebsseitig sind vorzugsweise derart auszulegen, dass bei einem motorseitigen Element ein Antrieb, insbesondere über eine starre Verbindung, durch einen Motor erfolgen kann und/oder dass bei einem abtriebsseitigen Element ein Antrieb eines Abtriebs, insbesondere über eine starre Verbindung, durch das abtriebsseitige Element erfolgen kann. Es ist also nicht zwingend eine geometrische Orientierung mit diesen Begriffen verbunden, wobei dies auch möglich sein kann.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Schnittansicht einer ersten Ausführungsform einer erfindungsgemäßen Motor-Brems-Einheit, in der die Bremse geschlossen ist.
- Fig. 2:: eine Schnittansicht einer ersten Ausführungsform einer erfindungsgemäßen Motor-Brems-Einheit, in der die Bremse geöffnet ist.
- Fig. 3:: eine schematische Ansicht einer Steuerrampe einer erfindungsgemäßen Motor-Brems-Einheit.
- Fig. 4:: eine Schnittansicht einer zweiten Ausführungsform einer erfindungsgemäßen Motor-Brems-Einheit.
- Fig. 5:: eine Schnittansicht einer dritten Ausführungsform einer erfindungsgemäßen Motor-Brems-Einheit.
- Fig. 6:: eine Schnittansicht einer vierten Ausführungsform einer erfindungsgemäßen Motor-Brems-Einheit.
- Fig. 7:: eine Schnittansicht einer fünften Ausführungsform einer erfindungsgemäßen Motor-Brems-Einheit.

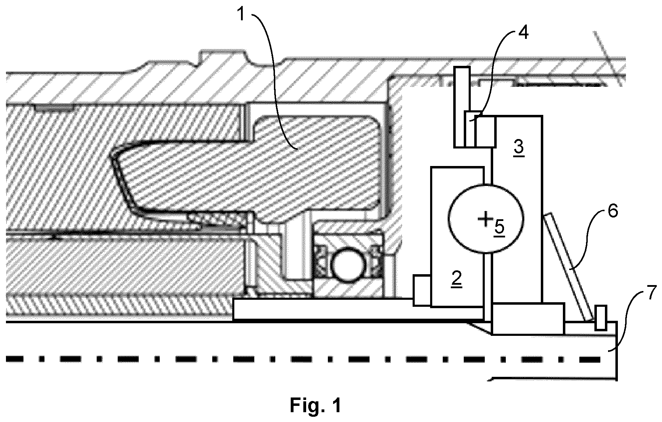

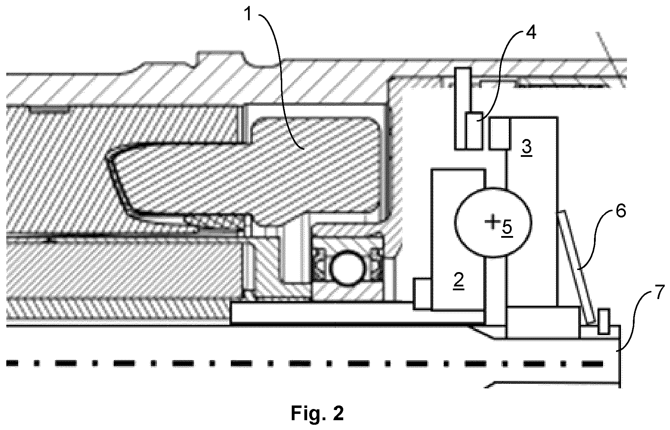

Fig. 1 und Fig. 2 zeigen mit der ersten Ausführungsform einer erfindungsgemäßen Motor-Brems-Einheit eine Grundausführung. Fig. 1 zeigt die Motor-Brems-Einheit in einem geschlossenen Zustand der Bremse und Fig. 2 zeigt die Motor-Brems-Einheit in einem geöffneten Zustand der Bremse.

Die Motor-Brems-Einheit aus Fig. 1 und 2 weist einen Motor 1, in Form eines Elektromotors, eine motorseitige Steuerscheibe 2, ein abtriebsseitige Steuerscheibe 3, Bremselemente 4, ein Übertragungselement 5, in Form einer Kugel, ein Federelement 6 und einen Abtrieb 7 auf. Die Motor-Brems-Einheit weist auch ein Gehäuse auf.

Die motorseitige Steuerscheibe 2, die abtriebsseitige Steuerscheibe 3, das Übertragungselement 5 und das Federelement 6 sind Bestandteile einer Steuereinheit. Die Bremselemente 4 sind Bestandteile einer Bremse.

Die Steuereinheit und die Bremse sind zwischen dem Motor 1 und dem Abtrieb 7 angeordnet.

Die motorseitige Steuerscheibe 2 ist mit einer Welle des Motors 1 verbunden. Die abtriebsseitige Steuerscheibe 3 ist mit einer Welle des Abtriebs 7 verbunden.

Jeweils in oder an der motorseitigen Steuerscheibe 2 und der abtriebsseitigen Steuerscheibe 3 sind Steuerrampen in Form von Kugelrampen angeordnet. Es ist auch denkbar, dass nur in oder an einer Steuerscheibe 2 oder 3 eine oder mehrere Steuerrampen angeordnet sind.

Die motorseitige Steuerscheibe 2 kann über das Übertragungselement 5 mit der abtriebsseitigen Steuerscheibe 3 drehbar verbunden werden, so dass sich die Steuerscheiben 2 und 3 gegenseitig oder eine Steuerscheibe 2, 3 die jeweils andere Steuerscheibe 2, 3 antreiben können.

Es können auch mehrere Übertragungselemente 5, insbesondere drei Übertragungselemente 5 vorhanden sein. Jedes Übertragungselement ist in oder an einer Steuerrampe der motorseitigen Steuerscheibe 2 und der abtriebsseitigen Steuerscheibe 3 angeordnet.

Durch ein Federelement 6, in Form einer bspw. Tellerfeder, wird die abtriebsseitige Steuerscheibe 3 gegen die motorseitige Steuerscheibe 2 gedrückt. Es können auch mehrere Federelemente 6 vorhanden sein, bzw. kann das Federelement 6 mehrere Federn aufweisen.

Ebenso drückt das Federelement 6 die abtriebsseitige Steuerscheibe 3 gegen ein mit dem Gehäuse fest verbundenes Bremselement 4. Die Bremse ist also geschlossen, wie dies in Fig. 1 dargestellt ist.

Ein anderes Bremselement 4 ist mit der abtriebsseitigen Steuerscheibe 3 fest verbunden. Es können jeweils auch mehrere Bremselemente 4 an dem Gehäuse und/oder der abtriebsseitigen Steuerscheibe angeordnet sein.

Die Bremselemente 4 können sowohl reibschlüssig als auch formschlüssig ineinander eingreifend ausgeführt sein.

Die motorseitige und/oder abtriebsseitige Steuerscheibe 2, 3 können jeweils ein axiales und/oder radiales Spiel aufweisen.

Sobald der Motor 1 antreibt und am Abtrieb 7 eine systemseitige Gegenkraft anliegt, wird die Bremse geöffnet, wie dies in Fig. 2 dargestellt ist.

Das Öffnen der Bremse erfolgt dadurch, dass das Federelement 6 über den Steuerrampenmechanismus, der insbesondere aus den Bauteilen 2, 3 und 5 besteht, komprimiert wird.

Die Steuerscheiben 2 und 3 werden von dem Übertragungselement 5 oder den Übertragungselementen 5, das oder die an Rampen der Steuerrampen entlang bewegt werden, auseinandergetrieben und die abtriebsseitige Steuerscheibe 3 bzw. das mit der abtriebsseitigen Steuerscheibe 3 fest verbundene Bremselement 4 hebt sich von dem mit dem Gehäuse fest verbundenen Bremselement 4 oder den mit dem Gehäuse fest verbundenen Bremselementen 4 ab bzw. löst sich.

Die Steuerrampen sind vorzugsweise symmetrisch angeordnet, sodass der Motor 1 das System bzw. die Steuereinheit in beide Richtungen bewegen kann.

Die Bremse öffnet vorzugsweise auch bei vorauseilenden Systemlasten, sofern der Motor 1 bremst bzw. gegenhält.

Sobald motorseitig kein Drehmoment anliegt, schließt die Bremse, ausgelöst durch das Federelement 6, wieder bzw. fällt wieder zu.

Es ist auch denkbar, dass die Motor-Brems-Einheit eine nicht dargestellte Konstant- oder Triggerbremse aufweist.

Damit der Motor 1 die Bremse lösen bzw. öffnen kann, ist vorzugsweise eine Gegenlast am Abtrieb 2 notwendig. Diese Gegenlast ist vorzugsweise gegeben, wenn am System bzw. am Abtrieb 7 vorzugsweise Lasten wie Gewichtslasten oder Luftlasten anliegen. Des Weiteren können im System auch mechanische Rücklaufsperren vorhanden sein, gegen die der Motor 1 antreibt. Ist keine dieser Gegebenheiten vorhanden, so kann die notwendige Gegenlast durch eine zusätzliche Konstantbremse ausgeglichen werden. Diese kann z.B. reibschlüssig und federvorgespannt ausgeführt sein, oder als Hysteresebremse.

Vorzugsweise erfolgt eine Wegbegrenzung in axialer und/oder radialer Richtung eines Wegs und/oder einer Bewegung der motorseitigen Steuerscheibe 2 und/oder der abtriebsseitigen Steuerscheibe 3. Die Wegbegrenzung erfolgt vorzugsweise mittels eines oder mehrerer Wegbegrenzungselemente.

Vorzugsweise erfolgt eine Begrenzung der Steuerrampen, z.B. durch ein Wegbegrenzungselement in Form eines Anschlags in einer oder allen Steuerrampen.

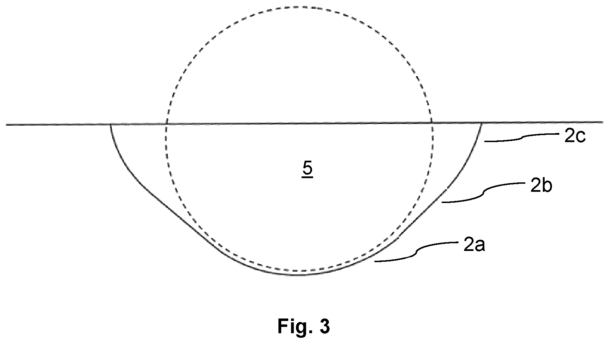

Der Steuerrampenmechanismus, der insbesondere aus den Bauteilen 2, 3 und 5 besteht, weist vorzugsweise einen festen Anschlag auf, damit die Übertragungselemente 5 die jeweiligen Steuerrampen nicht verlassen. Hierfür kann die Steuerrampe selbst am Ende einen Anschlag aufweisen, wie dies in Fig. 3 dargestellt ist.

Das Übertragungselement 5 in Form einer Kugel sitzt in Ruhelage, also insbesondere, wenn die Bremse geschlossen ist, am oder im Steuerrampengrund 2a der Steuerrampe.

Insbesondere wenn die Bremse geöffnet werden soll, kann sich das Übertragungselement 5 auf die Rampe 2b der Steuerrampe bewegen bzw. wird darauf bewegt.

Am Ende der Rampe 2b ist ein Steuerrampenanschlag 2c angeordnet, der derart ausgebildet ist, dass sich das Übertragungselement 5 nicht weiter in Richtung des Steuerrampenanschlags 2c bewegen kann.

Die Steuerrampe kann an nur einer Seite eine Rampe 2b und einen Steuerrampenanschlag 2c aufweisen oder an beiden Seiten, wie dies in Fig. 3 dargestellt ist.

Vorzugsweise können die Rampen 2b der Steuerrampe asymmetrisch aufgeführt sein.

Durch asymmetrische Ausführung der Steigungen der Rampen 2b ist es möglich, den Schaltpunkt in den beiden Drehrichtungen unterschiedlich zu gestalten.

Vorzugsweise kann eine axiale Wegbegrenzung erfolgen. Alternativ kann der axiale Weg der abtriebsseitigen Steuerscheibe 3 bzw. der Federweg des Federelements 6 begrenzt werden, wie dies in Fig. 2 dargestellt ist.

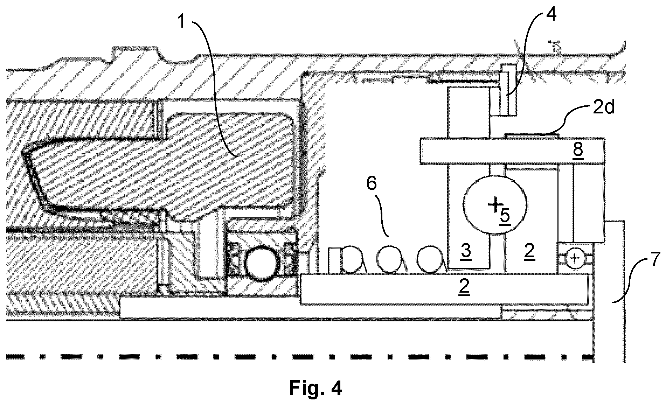

In der in Fig. 4 gezeigten Ausführungsform der erfindungsgemäßen Motor-Brems-Einheit weist diese ein Formelement 8 als Wegbegrenzungselement auf.

Die Wegbegrenzung kann über ein oder mehrere Formelemente 8 erfolgen, die eine Verdrehung zwischen den beiden Steuerscheiben 2 und 3 begrenzen.

Hierbei ist ein Formelement 8 starr mit dem Abtrieb 7 verbunden. Das Formelement 8 ist verschiebbar mit der abtriebsseitigen Steuerscheibe 3 verbunden, sodass eine axiale Relativbewegung möglich ist, aber keine Verdrehung. Das Formelement 8 ist weiterhin in einer Tasche bzw. Öffnung 2d der motorseitigen Steuerscheibe 2 so beweglich angeordnet, dass eine definierte Verdrehung ermöglicht wird.

Das Formelement 8 kann radial weiter außen als das Übertragungselement 5 angeordnet sein, wie dies in Fig. 4 dargestellt ist. Das oder die Formelemente 8 können also außen an der oder den Steuerscheiben angeordnet sein.

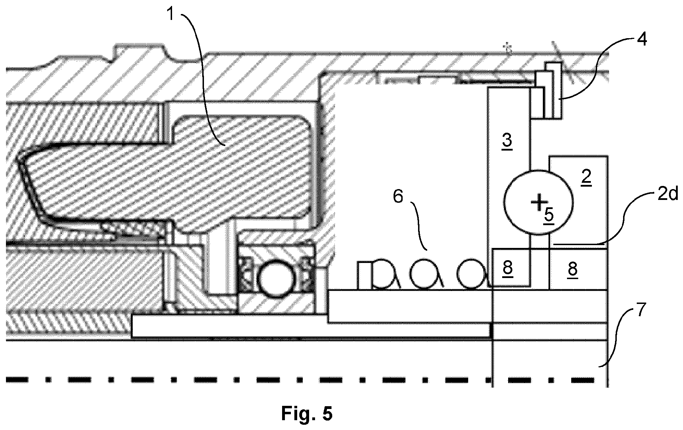

Fig. 5 zeigt eine Anordnung des Formelements 8 radial weiter innen als das Übertragungselement 5. Das oder die Formelemente 8 können also innen an der oder den Steuerscheiben 2, 3 oder innerhalb der oder den Steuerscheiben 2, 3 angeordnet sein.

Die in den Fig. 4 und 5 gezeigten Ausführungsformen weisen dieselben Bauteile, wie die in Fig. 1 und 2 gezeigt Ausführungsform in einer anderen Anordnung auf. Das Federelement 6 sowie die abtriebsseitige Steuerscheibe 3 sind in Fig. 4 gegenüber der motorseitigen Steuerscheibe 2 orientiert, wobei die abtriebsseitige Steuerscheibe 3 in Fig. 1 und 2 gegenüber der motorseitigen Steuerscheibe 2 nach außen orientiert sind.

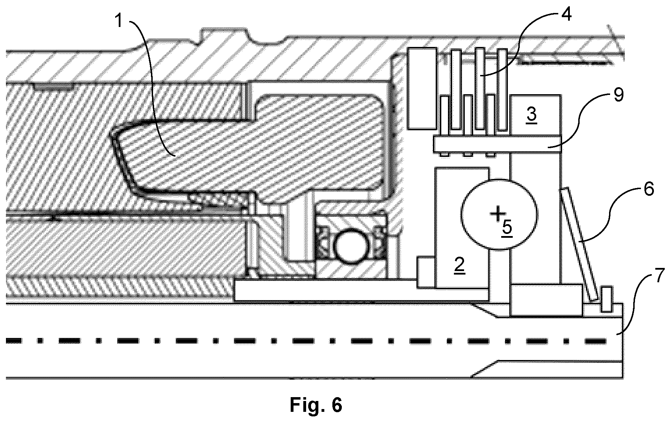

In der in Fig. 6 gezeigten Ausführungsform weist die Bremse mehrere Bremselemente 4 in Form eines Reibbelagspakets auf. Die Bremse kann also mehrere Reibbeläge zur Erhöhung der Bremskraft aufweisen. Ansonsten ist die Anordnung der Bauteile der in Fig. 6 gezeigten Ausführungsform wie bei der in Fig. 1 und 2 gezeigten Ausführungsform.

Durch Einführung eines oder mehrerer über den Umfang der abtriebsseitigen Steuerscheibe 3 verteilter Mitnehmer 9 können mehrere Reibpaarungen mit der abtriebsseitigen Steuerscheibe 3 so verbunden werden, dass sich die Bremskraft erhöht.

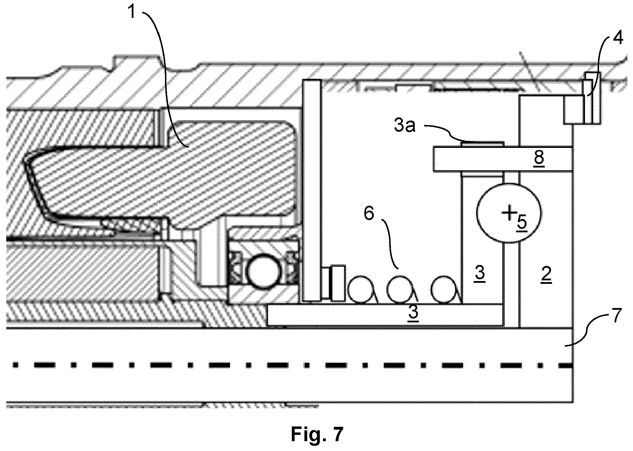

In der in Fig. 7 gezeigten Ausführungsform, die eine zu den in Fig. 4 und 5 ähnliche Anordnung er Bauteile aufweist, weist eine der Steuerscheiben 2 oder 3 oder beide Steuerscheiben 2 und 3 jeweils eine asymmetrischer Steuerrampe auf. Insbesondere kann damit ein Entfall des vollständigen Lösens bzw. Öffnens der Bremse erfolgen.

Durch Anordnung der Bauteile, wie dies in Fig. 7 gezeigt ist, ist es bei asymmetrischer Steuerrampe, wobei eine asymmetrische Ausführung der Steigungen der Rampen 2b vorhanden ist, denkbar, die Steuerrampe dafür zu nutzen, die Bremskraft in einer Drehrichtung zu verstärken. Bei Bewegung einer oder beider Steuerscheiben bzw. der Steuerrampe wird das Federelement 6 komprimiert, sodass sich die Kraft auf die Bremselement 4 verstärkt.

Es ist eine richtungsabhängige Bremskraftverstärkung durch den Steuerrampenmechanismus denkbar.

Die Vorteile der Erfindung liegen vorzugsweise darin, dass:
- Die Haltefunktion für ein Element eines Systems mit der Motor-Brems-Einheit, das durch einen Motor positioniert werden kann, gegeben ist, sobald der Motor nicht antreibt;
- Für die Haltefunktion kein schwerer Haltemagnet notwendig ist, um die Bremse zu öffnen bzw. zu lüften;
- Keine zusätzliche Funktionalität in der Systemsteuerung, wie bspw. einer Motorelektronik und/oder einem System-Computer notwendig ist;
- Keine zusätzlichen Stecker und Kabel notwendig sind, um die Bremse anzusteuern;
- Die Bremse rein mechanisch ist;
- Die Bremse hochgradig zuverlässig ist;
- Die Funktionalität der Bremse durch Sensoren in einem System mit der Motor-Brems-Einheit jederzeit überprüft werden kann;
- Im Antriebsfall keine zusätzliche Bremse in einem System mit der Motor-Brems-Einheit wirkt, sodass der Motor keine zusätzliche Kraft aufbringen muss;
- Ein System mit der Motor-Brems-Einheit und mit Rücklaufsperren so abgesichert werden kann, dass eine oder mehrere Rücklaufsperren verschleißen bzw. durchrutschen dürfen, ohne dass sich das System unkommandiert bewegt.

## Patentansprüche

1. Motor-Brems-Einheit, insbesondere für ein Luftfahrzeug, mit einem Motor, einer Bremse, einem Abtrieb und einer Steuereinheit, die derart ausgebildet und angeordnet ist, um die Bremse anzusteuern, wobei die Steuereinheit derart ausgebildet ist, um die Bremse zu öffnen, wenn ein Drehmoment an dem Motor und/oder dem Abtrieb anliegt und/oder die Bremse zu schließen oder geschlossen zu halten, wenn kein Drehmoment an dem Motor und/oder dem Abtrieb anliegt, **dadurch gekennzeichnet, dass** die Steuereinheit eine motorseitige und eine abtriebsseitige Steuerscheibe aufweist, wobei mindestens eine der Steuerscheiben eine oder mehrere Steuerrampen aufweist.

2. Motor-Brems-Einheit nach Anspruch 1, **dadurch gekennzeichnet, dass** zwischen der motorseitigen und der abtriebsseitigen Steuerscheibe ein oder mehrere Übertragungselemente, insbesondere Kugeln, angeordnet sind.

3. Motor-Brems-Einheit nach Anspruch 1 oder 2, **dadurch gekennzeichnet, dass** die Steuereinheit ein Federelement aufweist, wobei das Federelement derart ausgebildet und angeordnet ist, um die Steuerscheiben gegeneinander zu drücken und/oder um auf die Bremse eine Schließkraft auszuüben.

4. Motor-Brems-Einheit nach einem der vorhergehenden Ansprüche, **dadurch gekennzeichnet, dass** die Bremse zwei Bremselemente aufweist, wobei eines der Bremselemente mit einem Gehäuse und/oder das andere Bremselement mit der abtriebsseitigen Steuerscheibe verbunden ist, wobei vorzugsweise vorgesehen ist, dass die Bremselemente jeweils einen oder keinen Reibbelag und/oder ein Formschlussprofil, insbesondere eine Stirnverzahnung, aufweisen.

5. Motor-Brems-Einheit nach einem der vorhergehenden Ansprüche, **dadurch gekennzeichnet, dass** die Brems-Einheit ein oder mehrere Wegbegrenzungselemente aufweist, wobei das Wegbegrenzungselement oder die Wegbegrenzungselemente derart ausgebildet und angeordnet sind, um einen Weg und/oder eine Bewegung der Steuerscheibe oder der Steuerscheiben zu begrenzen.

6. Motor-Brems-Einheit nach Anspruch 5, **dadurch gekennzeichnet, dass** das Wegbegrenzungselement oder die Wegbegrenzungselemente in Form eines Steuerrampenanschlags in die Steuerrampe oder die Steuerrampen integriert sind, einen, insbesondere axialen und/oder radialen, Anschlag bilden und/oder ein Formelement aufweisen oder darstellen.

7. Motor-Brems-Einheit nach einem der Ansprüche 5 oder 6, **dadurch gekennzeichnet, dass** eine oder mehrere Steuerscheiben eine oder mehrere Öffnungen aufweisen, wobei ein oder mehrere Wegbegrenzungselemente derart ausgebildet und angeordnet sind, um die Öffnung oder die Öffnungen zu durchdringen oder in diese einzudringen.

8. Motor-Brems-Einheit nach einem der vorhergehenden Ansprüche, **dadurch gekennzeichnet, dass** die Motor-Brems-Einheit eine oder keine Rücklaufsperre und/oder eine oder keine Konstantbremse aufweist.

9. Motor-Brems-Einheit nach einem der vorhergehenden Ansprüche, **dadurch gekennzeichnet, dass** die Bremse ein Reibbelagspaket aufweist und/oder dass der Motor ein Elektromotor ist.

10. Motor-Brems-Einheit nach einem der vorhergehenden Ansprüche, **dadurch gekennzeichnet, dass** die Steuerrampe oder mindestens eine der Steuerrampen derart ausgebildet und angeordnet sind, dass die Bremskraft der Bremse bei einer, insbesondere Dreh-, Bewegung und/oder Position der Steuerscheibe gegenüber der Bremskraft der Bremse bei der anderen, insbesondere Dreh-, Bewegung und/oder Position der Steuerscheibe erhöht ist.

11. Hochauftriebssystem, insbesondere für ein Luftfahrzeug, mit einer Motor-Brems-Einheit nach einem der Ansprüche 1 bis 10.

12. Hochauftriebssystem nach Anspruch 11, **dadurch gekennzeichnet, dass** das Hochauftriebssystem einen oder mehrere Aktuatoren zur Ansteuerung einer Steuerfläche aufweist, wobei jeweils eine Rücklaufsperre an einem Aktuator angeordnet ist, wobei die Motor-Brems-Einheit derart ausgebildet und angeordnet ist, um die Steuerfläche beim Ausfall einer oder mehrerer Rücklaufsperren in der aktuellen Position zu halten.

13. Hochauftriebssystem nach Anspruch 11 oder 12, **dadurch gekennzeichnet, dass** das Hochauftriebssystem keine zusätzliche Brems-Einheit, vorzugsweise keine Konstantbremse und/oder separat schaltbare Brems-Einheit, aufweist.

14. Luftfahrzeug, insbesondere Flugzeug, mit einer Motor-Brems-Einheit nach einem der Ansprüche 1 bis 10 und/oder einem Hochauftriebssystem nach einem der Ansprüche 11 bis 13.

15. Verfahren zum Betreiben einer Motor-Brems-Einheit nach einem der Ansprüche 1 bis 10, **gekennzeichnet durch** die folgenden Schritte:
- Anlegen eines Drehmoments an den Motor und/oder den Abtrieb, insbesondere durch den Motor, und Öffnen der Bremse; und/oder
- Anlegen keines Drehmoments auf den Motor und/oder den Abtrieb und Schließen oder geschlossen halten der Bremse.
